# EUROPEAN PATENT SPECIFICATION

(11) **EP 2 092 735 B1**
(45) Date of publication and mention of the grant of the patent: **21.11.2018**
(21) Application number: 07824384.7
(22) Date of filing: 30.10.2007
(51) Int. Cl.: H04N 5/262

(54) **SYSTEM FOR ENHANCING VIDEO SIGNALS**
SYSTEM ZUR ERWEITERUNG VON VIDEOSIGNALEN
SYSTÈME POUR AMÉLIORER DES SIGNAUX VIDÉO

(30) Priority: 30.10.2006 GB 0621579
(43) Date of publication of application: 26.08.2009
(73) Proprietor: RENNIE, Paul David, St. Peter Jersey JE3 7ED (GB)
(72) Inventor: RENNIE, Paul David, St. Peter Jersey JE3 7ED (GB)
(74) Representative: Milhench, Mark Lorne
(86) International application number: PCT/GB2007/004140
(87) International publication number: WO 2008/053200

(56) References cited:
- WO-A-00/39498
- WO-A-02/28093
- US-A- 4 975 770
- US-A1- 2005 088 544

## Description

### FIELD

This invention relates to systems for enhancing video signals. A particularly preferred embodiment of the present invention relates to a system that is operable to enhance a video signal for broadcast, for example by means of a terrestrial or satellite television system.

### BACKGROUND

Visual images which are presented to a viewer by means of a television, a monitor or other visual equipment tend to be two-dimensional facsimiles of what is, in most instances, a three dimensional scene.

Whilst this is not too much of problem for viewers watching television programmes such as light entertainment programmes, the lack of a third dimension can be a serious problem when viewing scenes involving a number of elements that are moving in different directions to one another.

Another related problem is that viewing two-dimensional representations of certain scenes can cause three-dimensional information, such as surface topography for example, to be difficult for the viewer to ascertain or in some instances for that topographical information to be lost altogether.

Sporting events often provide good illustrative examples of these problems. For example, a viewer presented with a wide angle shot of a footballer kicking a football through the air in the course of a football match can find it hard to appreciate in exactly what direction the football is moving at any given point in time. Only when the ball is close to another player on the pitch can the viewer readily determine in which direction the ball is travelling.

Whilst this phenomenon tends not detract to a large degree from the enjoyment gained by the viewer watching a game such as football (where the ball tends to spend a relatively large amount of time in relative close proximity to the ground or another player), in games like rugby it can be sorely frustrating as when the ball is punted, for example, it is only possible to determine where it is going to land by looking at the reactions of the players - in particular players who are expecting to receive the ball. In circumstances where the ball is punted beyond the players, as often occurs in the course of a game of rugby, it is very difficult for the viewer to appreciate what the trajectory of the ball actually is.

A good illustration of this problem occurs when a kicker attempts a conversion, and the camera relays to the user a view from behind the posts. In such circumstances it is relatively easy for the viewer to ascertain where the ball is travelling if the ball is kicked high over the cross-bar and roughly in-between the uprights. However, where the ball is close to the uprights or close to the crossbar it is very difficult to determine whether the ball has travelled over or below the crossbar, or between the posts or outside the posts.

This problem can also occur when viewing golf. In the game of golf it is often the case that greens, over which balls are putted, are designed to have undulating surfaces so as to pose a challenge to the player trying to putt the ball in the hole. However, for a viewer looking at a two-dimensional representation of the green on a television screen, it is very difficult for the viewer to get an appreciation of the magnitude of the challenge faced by the player until the ball has been struck and is travelling over the green. Even then it can be difficult for the user to ascertain just exactly why it was that the ball moved in a certain direction at a particular point during execution of the stroke. Similarly, when a player drives from the tee, it is difficult for the viewer watching the ball as it moves down the fairway to ascertain in which direction the ball is moving in flight, and whether it is on or off target.

Problems of this ilk are not new, and attempts to avoid such problems have been made in the past.

For example, it has previously been proposed - particularly in the context of motion pictures - to use stereoscopic imagery to provide a viewer with the impression that the image they are viewing is in three dimensions. In one technique, two images are projected superimposed onto the same screen through circular polarizing filters of opposite handedness. The viewer wears a pair of eyeglasses which contain a pair of analysing filters (circular polarisers mounted in reverse) of opposite handedness. Light that is left-circularly polarized is extinguished by the right-handed analyzer; while right-circularly polarized light is extinguished by the left-handed analyzer. The viewer sees different images with his or her two eyes, and differences between those images give the user the impression of seeing in three dimensions.

Another technique is to display two-colour anaglyph images that are viewed by a user whilst wearing a pair of glasses that are provided with a red filter for one eye, and a cyan filter for the other. The images are offset from one another, and the filters ensure that only one of the two images is viewed at each eye so that differences between the two images give the user the impression of the image being rendered in three dimensions.

More recently, in 2002, Sharp Corporation (a steering member of a consortium consisting of a large number of companies working to develop 3D applications and equipment) has developed an LCD television/monitor that is capable of generating a 3D image for viewing by users. The Sharp LCD display creates a so-called "autostereoscopic image" defined as a stereoscopic image that is viewable by a user without the user having to wear a set of specially designed glasses. As before, the LCD concurrently displays two images, but in this instance the display includes a parallax barrier which can be energized to ensure that each eye only sees one of these images. The parallax barrier comprises a series of vertical slots that are carefully designed to block parts of the overall image to thereby enable the eyes of a user to separately see each of the displayed images.

Whilst each of these previously proposed arrangements does enable the user to see a 3D image, they each have their own associated drawbacks. For example, the requirement for a user to wear special glasses is inconvenient for the user, and for a broadcast system the need to simultaneously display two offset images is complex and processing intensive. The Sharp LCD is a better solution in that it does not require the user to wear special glasses, but it would necessarily require viewers to purchase expensive items of new equipment and would still require complex changes to images being broadcast.

It would be advantageous, therefore, if a system could be devised whereby video signals can enhanced to enable a viewer to more easily appreciate three-dimensional characteristics of a scene being viewed.

PCT Patent Application No. WO 02/28093 discloses a system for enhancing a video signal, the system comprising a control unit that is configured to superimpose a series of contours, markers and arrows on a video image to indicate to the viewer the topographical characteristics of the scene being viewed.

PCT Patent Application No. WO 00/39498 discloses a mounting for an optical apparatus having an optical axis. The mounting has non-moving and moving components including a base and a support for the optical apparatus which provide movement about one or more orthogonal axes and having damping means between the moving and non-moving components for the or each axis.

US Patent Application No. 2005/088544 discloses a method of generating a composite output that includes the steps of: a) capturing a live image; b) generating an electronic map; and c) generating a composite output including at least one of a live image portion corresponding to the live image captured in step a), and an electronic map portion corresponding to the electronic map generated in step b).

US Patent No. 4975770 discloses a method for enhancing golf green contours for television broadcasts that comprises the steps of providing a grid pattern of intersecting parallel lines over the surface of a golf green, recording the grid pattern, and broadcasting the grid pattern onto a television screen simultaneously with the broadcast of the golf green during play thereon, whereby contours presented by the green are more clearly depicted by the grid pattern. The method is practiced with relative simple equipment and without interfering with play of the game. A related method can be employed for enhancing contours of other land surfaces for broadcast purposes.

### SUMMARY

To this end, a preferred embodiment of the present invention provides a system for enhancing video images as defined in Claim 1. Preferred features of this embodiment are set out in the dependent claims.

By virtue of this arrangement it is possible to generate an output video signal in which the three-dimensional characteristics of the scene have been enhanced, thereby enabling a viewer of the output signal more easily to appreciate those three dimensional characteristics of the scene. Advantageously, the viewer does not need to purchase any special equipment to view this enhanced image, nor do they need to wear special 3D glasses to appreciate the topographical characteristics of the scene.

Other aspects of the present invention, and preferred features and advantages thereof, will be apparent from the accompanying claims and the following detailed description of preferred embodiments of the present invention.

### BRIEF DESCRIPTION OF THE DRAWINGS

Various preferred embodiments of the present invention will now be described, by way of illustrative example only, with reference to the accompanying drawings, in which:
Fig. 1 is a schematic representation of a golf green;
Fig. 2 is a cross-sectional representation of the green depicted in Fig. 1;
Fig. 3 is a schematic representation of the green as it might appear in a conventional video image;
Fig. 4 is a schematic representation of a system according to a first embodiment of the present invention;
Fig. 5 is a schematic representation of an illustrative topographical map for the green depicted in Fig. 1;
Fig. 6 is a schematic representation of a pixel-by-pixel frame processing method that is outside of the scope of the present invention;
Figs. 7a and 7b are schematic representation of an illustrative block-by-block frame processing method in accordance with an embodiment of the invention;
Fig. 8 is a schematic representation of a process for aligning a map and a video frame;
Fig. 9 is a schematic representation of an alternative means for creation of a topographical map;
Fig. 10 is a schematic illustration of a control unit for use with the system described;
Fig. 11 is an aerial view of a golf hole;
Fig. 12 is a schematic representation of a diagram depicting different horizontal trajectory zones for a golf ball;
Fig. 13 is a schematic representation of a system for enhancing video images that is outside of the scope of the present invention;
Fig. 14 is a flow chart depicting an illustrative mode of operation of the system depicted in Fig. 13;
Fig. 15 is a schematic representation of a diagram depicting different vertical trajectory zones for a golf ball; and
Fig. 16 is a flow chart depicting another illustrative mode of operation of the system depicted in Fig. 13.

### DETAILED DESCRIPTION

Various presently preferred embodiments of the present invention will now be described with particular reference to a viewer watching a game of golf on a television. However, it will be appreciated, and should be noted, that the teachings of the present invention are not limited solely to watching golf, nor are they limited to broadcast television systems. The following detailed description should therefore be read as being merely illustrative of the teachings of the invention, and not as limiting the scope of the invention.

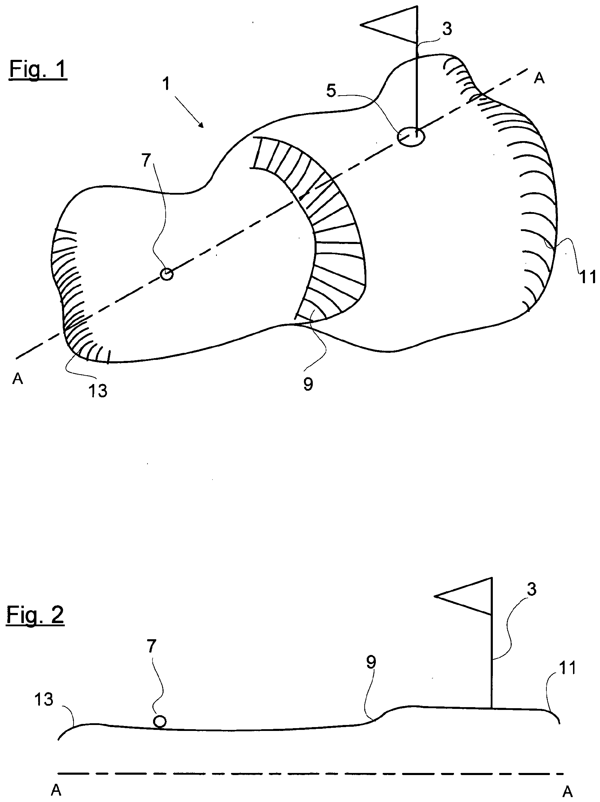

Referring now to Fig. 1, there is shown a schematic representation of a golf green 1 that includes a pin 3 (flag) inserted into a hole 5 into which a player (not shown) will try to putt a ball 7. The green is shown as it would be seen by a player and includes, in this instance, an incline 9 between the ball and the hole, and the green also falls away (from the point of view of the depicted position of the ball) towards the rear 11 and the front 13 of the green.

Fig. 2 is a cross-sectional view of the green along a line A-A (shown in Fig. 1) joining the ball 7 and the pin 3. As is clearly illustrated in Fig. 2, for the player to successfully putt the ball into the hole, they must hit the ball sufficiently hard for it to get up the incline 9, but not so hard that it overshoots the hole 5 and rolls off the back 11 of the green. Furthermore, because the player has to hit the ball across the face of (i.e. at an angle to) the incline 9, they may have to aim slightly to one side of the pin to allow for the trajectory of the ball to curve slightly as it traverses the incline.

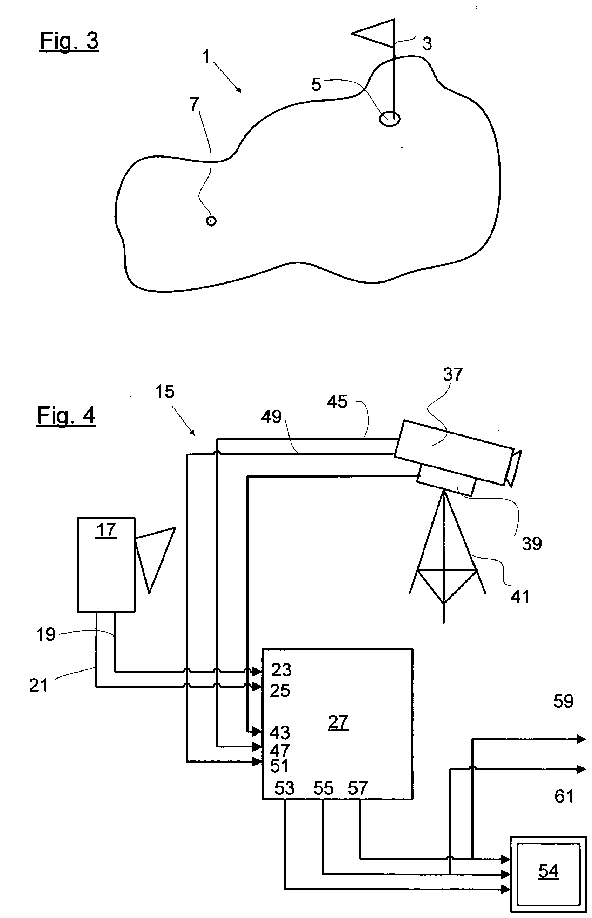

Fig. 3 is a schematic representation of the same golf green 1 as viewed by someone watching the game on a television. As shown in Fig. 3, the green 1 displayed to the viewer is without any topographical information, and as such the shot required of the player being watched by the viewer looks to be a relatively simple one. In particular, the viewer has no appreciation of the fact that there is an incline between the ball and the pin and a drop-away on the other side of the pin. The viewer also has no appreciation of the fact that the ball will be traversing the incline and hence needs to be aimed to one side of the pin. This lack of appreciation seriously detracts from the viewer's enjoyment of the game they are watching, as many putts tend to look a lot easier to play than they actually are in reality, and hence the viewer tends to put a failed putt down to a lack of skill on the part of the player rather than to the complexity of the shot required.

Fig. 4 is a schematic representation of the components of a system 15 in accordance with a preferred embodiment of the present invention.

As shown in Fig. 4, the system 15 comprises a 3D scanner 17, such as a laser (LiDAR) or radar scanner (the like of which is well known in the art), that is operable to generate topographical map data of a scene of interest, in this instance a green on a golf course. Illustrative laser scanners are the Riegl LMS range of laser scanners (see: www.riegl.co.at), for example the LMS-Z210ii or LPM-i800HA LiDAR scanners. The scanner 17 includes a direction data output 19 and a topographical data output 21, and these outputs are connected to respective inputs 23, 25 of a control unit 27. The direction data output may comprise, for example, azimuth data defining the angular distance in the horizontal plane between the direction that the scanner is currently pointing in and a reference direction.

The scanner may be a permanent component of the system, or in an alternative arrangement the scanner may only be deployed to capture a 3D scan of the area of interest, following which the system may be operated without a scanner being present and in accordance with the topographical map previously generated from the data output by the scanner.

The system 15 further comprises a video camera 37 (for example a broadcast quality CCD RGB camera) mounted on a gyro unit 39 that is supported by a tripod 41. The gyro unit 39 functions to provide positional information regarding the direction in which the camera is pointing, and this information is input to a camera position data input 43 of the control unit 27. The camera 37 includes a video signal output 45 through which a video signal is outputted to a video signal input 47 of the control unit 27, and a data output 49 through which a data signal (for example, relating to control information regarding the video signal) is outputted to a data signal input 51.

The control unit 27 has a map output 53 through which a signal providing a visual indication of the topographical map may be output to a monitor 54. The control unit 27 also has a video output 55 through which the video signal (alone) from the video camera may be output to the monitor 54, and a combination signal output 57 through which an enhanced video signal (consisting of a version of the video signal that has been enhanced in accordance with the topographical map to accentuate three-dimensional characteristics of the green) is output to the monitor 54. Further outputs 59, 61 are provided for transmitting the video and combination signal to a remote editing suite for editing and subsequent broadcast. In a particularly preferred arrangement, the video signal output from the control unit 27 is time-delayed to allow sufficient time for processing of the combination image signal and thereby enable the unadulterated and enhanced video signals to be received at the monitor 54 and elsewhere in a time synchronised fashion.

The control unit 27 receives topographical data from the scanner and interprets that data to define a topographical map which identifies three-dimensional features of the scene being scanned. If the location of the scanner is the same as that of the video camera 37 (for example, if the scanner is mounted on the camera) and the scanner and camera have the same field of view, then the orientation of the map need not be adjusted and the map can be used in the manner later described to enhance video images. If, however, the camera and scanner are at different locations, or if the camera is to have an adjustable field of view (for example a zoom mode) then the control unit will need to orientate the map with respect to the position of the camera so that the view of the green afforded by the map is the same as that afforded by the camera. One way in which this map orientation is accomplished will later be described in detail. However, for the purposes of the following description of the manner in which the control unit operates to enhance the video image, the position of the scanner and camera will be assumed to be identical (as may occur if the scanner and camera are integrated into one unit) and the two components will be assumed to have identical fields of view.

In a preferred embodiment of the present invention the control unit 27 may comprise a portable computing resource (such as a laptop computer) configured, *inter alia*, to execute software for interpreting topographical data to define a topographical map of the type described above. The topographical map may include all of the topographical information for the green (i.e. relatively level regions of the green as well as increases and decreases in the surface height of the green), or in a preferred embodiment the topographical information may be further processed so that the map includes only those elements of topographical significance, for example regions where the green includes a local increase or decrease in surface height. This enhancement is preferred for the simple reason that subsequent processing of a video image of the green (to enhance the image to accentuate three-dimensional elements of the green for the viewer) is greatly simplified as that processing need only be undertaken for those regions of the image which correspond to a region of the map that includes a three-dimensional element.

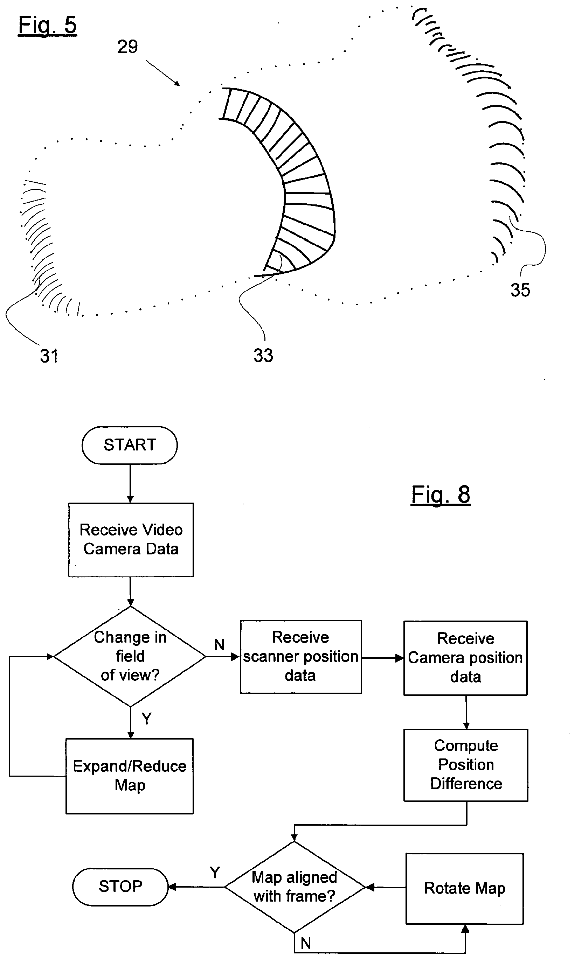

Fig. 5 is a schematic representation of a topographical map generated in accordance with this preferred embodiment. As depicted, the map 29 includes a first element 31 corresponding to the incline at the front 11 of the green, a second element 33 corresponding to the incline between the ball 7 and the hole 5, and a third element 35 corresponding to the fall-away at the rear 13 of the green. The green outline is shown in dotted lines for illustration and may or may not form part of the map. For each of these elements, the control unit is operable to determine the type of element detected (for example an increase or decrease in surface height) and to select from associated storage the appropriate enhancement to be applied to the image so as to accentuate the three-dimensional formations in the video image that is viewed by the viewer.

In one embodiment the control unit may be configured to implement a pixel-by-pixel analysis of each frame of the video signal from the video camera. Specifically, the control unit may be configured to process successive pixels of a frame of the video image signal from the camera and determine from the map whether those pixels correspond to a region of the scene in which a three-dimensional formation is located. If the control unit determines that the pixels do correspond to a region in which a three-dimensional formation is located, the control unit determines from the map the type of formation and retrieves from storage the appropriate enhancement to be applied to that pixel. The control unit then applies the appropriate enhancement to the pixel and outputs the enhanced pixel to a temporary store for pixels of a given frame, before outputting the enhanced frame once all the pixels in that frame have been analysed. Pixels that do not require enhancement are passed directly to the temporary store.

In a modification of this arrangement that is highly preferred for reducing the processing required, the control unit is configured to first undertake a coarse block-by-block scan of an input frame of the video signal, following which the control unit undertakes a pixel-by-pixel analysis of only those blocks of the frame which are identified in the map as including at least a part of a three-dimensional formation.

For an arrangement where the camera and scanner have a fixed positional relationship and share the same field of view, the abovementioned process need only be completed once (although it would be prudent to check the alignment of scanned map and video image every so often). For circumstances where the camera and scanner are located at different positions and/or have different fields of view, the alignment of map and image needs to be checked for each frame of the video image before that frame is processed to enhance the pixels therein. Positional data from the camera and scanner allow the control unit to compare the direction of the map's field of view and the direction of the camera's field of view, and adjust the orientation of the map (for example by rotating the map) so that the direction of the field of view of the map matches that of the particular frame of the video signal being processed. For changes in the camera's field of view (occasioned for example by a zoom of the camera), video data output from the camera indicating the change in field of view is received by the control unit, and the map is enlarged or reduced in scale to in accordance with the video data received by the control unit.

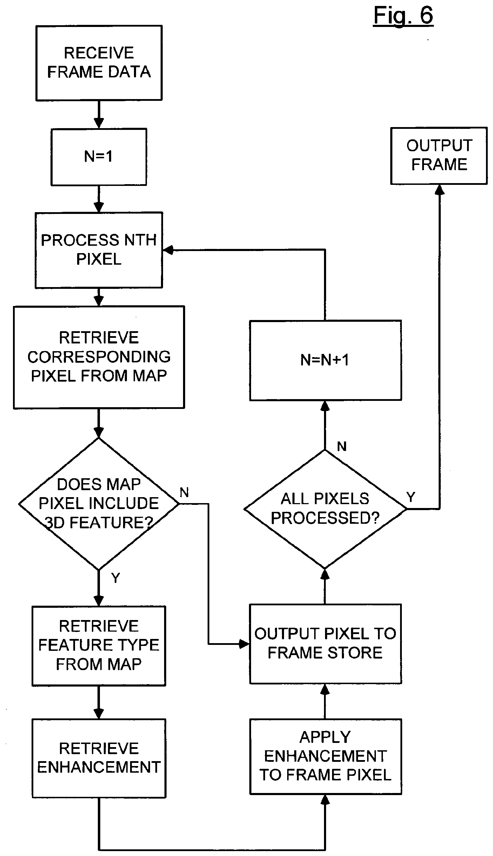

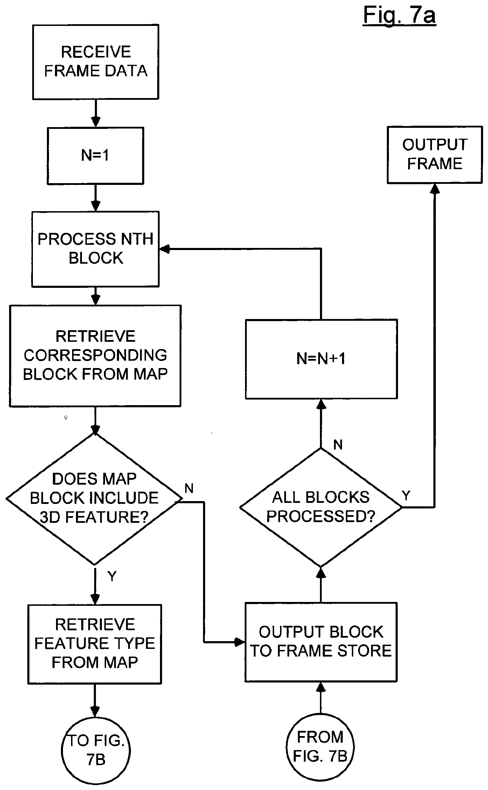

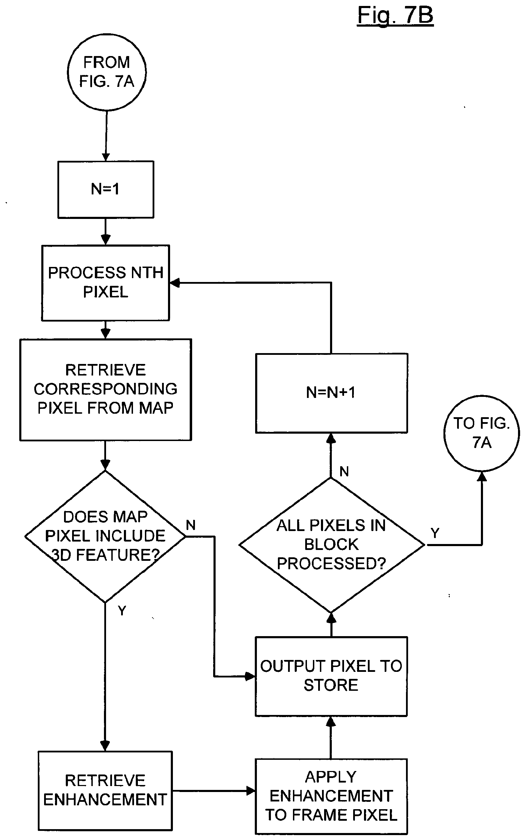

Fig. 6 is a schematic representation of a process whereby frames of an input signal may be processed pixel-by-pixel, and Figs. 7a and 7b are schematic representation of a process in accordance with an embodiment of the invention whereby frames of an input signal may be subjected to a coarse scan following which only those blocks of the frame which contain three dimensional features are further processed pixel-by-pixel. Fig. 8 is a schematic representation of the process by which the control unit compares the relative directions and/or content of the camera and scanner fields of view for a given frame, and adjusts the map so that it matches the field of view of the camera.

In the abovementioned embodiment, the scanner is capable of generating a 3D scan of the scene of interest from a single scan. It is conceivable, however, that the system may instead be implemented with a surface scanning device that is not able to directly output data that is representative of a 3D surface.

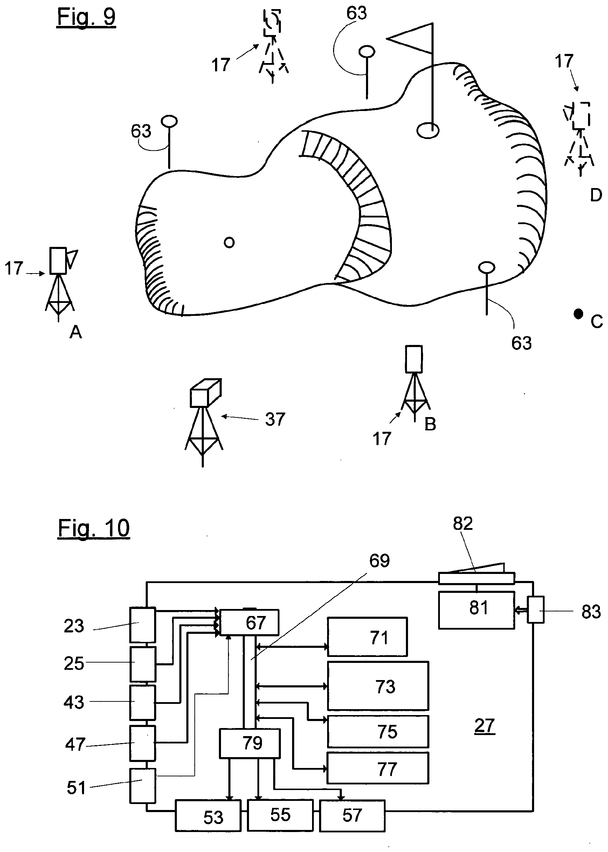

Fig. 9 is a schematic representation of such a system in use. In operation of such a system, the scene is provided with a number of positional markers 63 which are each at a known position and act as reference points for each scan that is undertaken with the scanner 17. The positional markers 63 may comprise prominent features of the scene (such as a tree or part of a grandstand) and/or signal reflectors (for example laser reflectors) at spaced locations around the periphery of the scene for which a map is to be generated. These reflectors are of course removed before the scene is filmed with the video camera.

In operation of such a system to generate a 3D scan, the scanner 17 is located at a first known position "A" and is operated to scan the scene to generate data regarding the topography of the green. The scanner 17 is then moved to a second known position "B", preferably at 90 or 120 degrees to the first position "A", and a second scan is undertaken to generate a second set of topographical data that is angularly offset from the first by an amount corresponding to the change in angular position of the scanner for the first and second scans. Each scan includes data from the positional markers, and as such the control unit can align the two scans and subsequently superimpose them to provide a quasi three-dimensional view of the scene being scanned.

In this configuration it is assumed that the video camera 37 used to capture video images of the scene will be located at or between points the aforementioned first and second scan positions. If, in fact, the camera may be located outside of these positions, for example at position "C", then a third scan may need to be taken from a third known position "D" and overlaid with the first and second scans. If the camera needs to be free to move about the periphery of the green, then four scans may be taken - each offset from neighbouring scans. In Fig. 9, the scanner is shown in ghost at illustrative known positions from which a third and fourth scan might be taken.

In an alternative arrangement, the aforementioned known positions may be defined with respect to a common direction, for example north. In this way, scans generated at each of said positions may be aligned so that they are similarly orientated and can be combined to provide a three-dimensional view of the scene.

In the aforementioned embodiments, the enhancement to be applied to regions of topographical interest in the scene may be applied to individual pixels, or to groups of pixels. The enhancements could comprise, in a particularly preferred arrangement, a gradual shading applied to pixels of the 3D feature in question to give the viewer the impression that the surface of the green is not level at that point on the green. Such shading is routinely used by artists to give perspective to two-dimensional images of three-dimensional subjects, and similar techniques can be employed here. The process may be automated so that the control unit is configured to sample the colour of a given pixel or block in which a three dimensional feature is determined by the map to occur and, starting from the colour of the sample, to lighten or darken that sampled colour (and if necessary sampled colours of neighbouring pixels or blocks) in accordance with the 3D feature type determined by the control unit from the map. Thus, for an incline the sampled original colour may be enhanced by darkening the original colour at the base of the incline and gradually decreasing the degree of applied darkening towards the top of the incline so that pixels at the top of the incline have substantially the same colour as the originally sampled pixel.

In an alternative arrangement, the control unit may be configured to enhance the video image by applying contour lines to regions of the image that are determined by the map to correspond to 3D features. In such an arrangement, as with contour lines traditionally used on maps, the spacing of the contour lines across the 3D feature would give the viewer an appreciation of the type of 3D feature that they are looking at.

The aforementioned control unit may, in one particularly preferred embodiment, comprise a laptop computer configured to execute software to implement the functionality described above. In general terms, however, the control unit may be as illustrated in Fig. 10.

Referring now to Fig. 10, the control unit 27 comprises the abovementioned data input interfaces (at least), namely: the topographical data input 25, the scanner direction data input 23, the video data input 51, the video signal input 47, and the camera position data input 43.

These inputs are coupled, via an input/output interface 67 to a data bus 69 that is coupled to a processor 71, a data store 73 (such as a hard disk or array of hard disks), random access memory (RAM) 75 and read only memory 77. A second input/output interface 79 couples the bus 69 to the aforementioned map output interface 53, the video signal output interface 55 and the combination signal output interface 57. The control unit 57 further comprises a power supply unit 81 and on/off switch 82, which in this embodiment comprises a transformer configured to convert mains power from a power input 83 into a suitable voltage for the remaining components of the control unit. As an alternative to a mains power supply, the power supply unit 81 may instead comprise a battery.

It will be appreciated from the foregoing, that the system described enables a viewer to better appreciate the topographical features of, in this case, a golf green, and thereby better enables the user to appreciate the difficulty of a given putt. It will also be appreciated that the particular embodiments described above may be modified without departing from the scope of the invention as defined by the claims. For example, the teachings of the present invention are not limited solely to viewing golf but may be useful in many other circumstances.

As mentioned previously, another problem to be addressed concerns improving the extent to which a viewer can appreciate the trajectory of an object moving through a two-dimensional scene. The following arrangements are outside of the scope of the invention and describe various ways in which this particular problem may be addressed, and one preferred embodiment will again be described with particular reference to a viewer watching a game of golf on a television - however it should again be stressed that this application is only illustrative, and that the teachings of the invention may otherwise be applied.

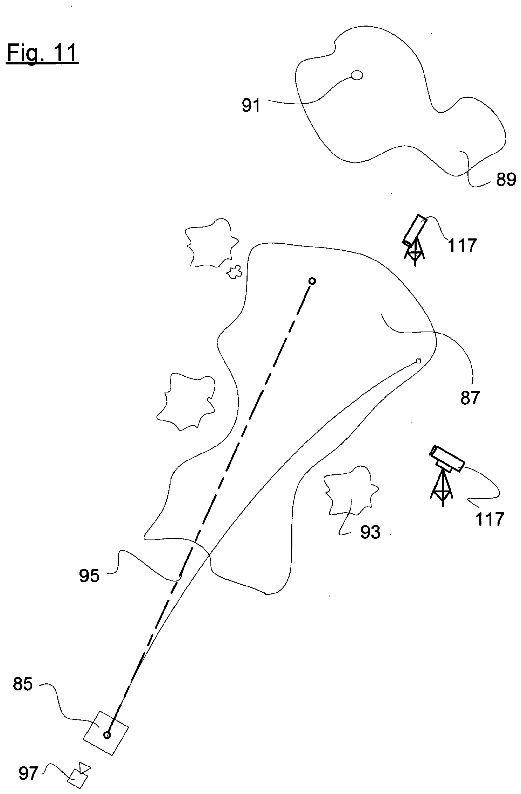

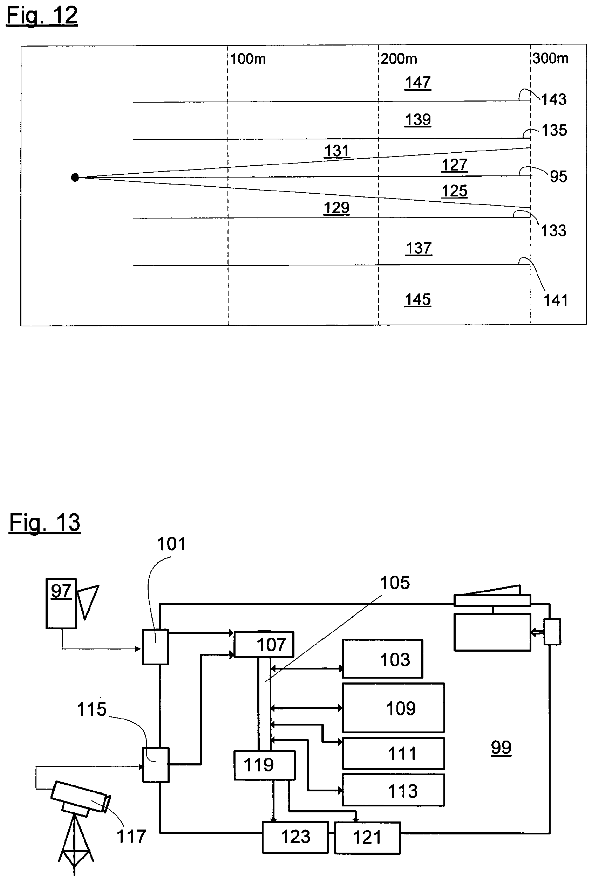

Referring now to Fig 11, there is shown an aerial view of an illustrative par four hole on a golf course. The hole comprises a tee region 85 from which a player drives their ball, a fairway region 87, a green 89 that includes a pin (hole) 91, and several hazards 93 (in this instance, trees). A player playing this hole will seek to drive their ball from the tee 85 towards the green 89 so that the ball lands in the fairway 87, avoids the hazards 93, and is in a good position for chipping to the green 89. For any given hole, there is a notional ideal trajectory for the ball (indicated in Fig. 12 by the dashed line 95), and if the player should manage to hit the ball along or close to that trajectory, then the ball should end up in a good position for the player's next shot.

Whilst it is relatively easy for a player on the course to determine whether a given shot is following the aforementioned ideal trajectory, it is often very difficult for a television viewer (and indeed for commentators commentating on the game) to determine whether the ball is on course, or veering to one side of the fairway. Often the only way that a viewer can tell how well the ball has been hit by the player is for the viewer to watch the reaction of the player and any spectators once the shot has been played.

To address this problem this arrangement provides a system as depicted in Fig. 13. The system comprises a scanner 97, such as a LiDAR or RADAR scanner, that is placed (as shown in Fig. 11) so as to have a clear view of the ball in flight. For example, the scanner may be located behind the tee region 85 and arranged to have a field of view which encompasses at least the tee region 85 and fairway 87.

As is well known in the art, such scanners are operable to sense the position of objects within the scanner's field of view, and as a consequence such scanners can be used in systems for tracking objects moving through the field of view. In particular, systems employing such scanners can be configured to track the position with respect to time (and hence the trajectory) of an object moving through the field of view, and hence can be used to track a ball that has been struck by a player and is moving through the scanner's field of view.

Data representing the position of objects within the scanner's field of view is output to a control unit 99 which receives the data on input 101. The control unit 99 includes a processor 103 that is operable to process the data, in a known way, to identify objects that are moving within the field of view - for example a golf ball moving through the field of view.

The processor 103 is coupled to the data input 101 via a data bus 105 and a first input/output interface 107. The control unit 99 further comprises a data store 109, random access memory (RAM) 111, and read only memory (ROM) 113. The processor is also coupled, again via the input/output interface 107 to a video signal input 115 which is configured to receive a video signal from a video camera 117 that has been arranged to capture video images of the hole being played.

The data store 109 includes a user specified map for the hole being played, and an illustrative example of such a map is depicted schematically in Fig. 12. In this instance, for simplicity, it is assumed that the viewer need only know whether and/or to what extent the ball is moving away from the notional ideal trajectory in a horizontal plane. To this end the map provides a plan-view of the hole which identifies an ideal trajectory 95, and "safe" regions 125, 127 to either side of the ideal trajectory which relate to ball trajectories which, whilst not being ideal, would nevertheless be considered to be an acceptable shot if a ball were to be hit into them. First "off-target" regions 129, 131 are defined as being zones between the limit of respective safe regions 125, 127 and first notional lines 133, 135; second "off target" regions 137, 139 are defined as being zones between respective first notional lines 133, 135 and second notional lines 141, 143 yet further from the ideal trajectory 95, and third "off target" regions 145, 147 are defined as being zones beyond respective second notional lines 141, 143. As will later be described, in another embodiment both the position of the ball in a horizontal plane and the position of the ball in a vertical plane may be tracked.

The processor 103 is configured, for a given hole, to retrieve the appropriate map from the data store 109, and in subsequent processing steps the processor is operable to determine from position data input from the scanner the position of the ball with respect to the map, and hence whether the ball is in the aforementioned safe zone or one of the off-target regions. Following this determination, the processor is operable to retrieve the appropriate enhancement to indicate to the user whether and/or the extent to which a given shot is off-target.

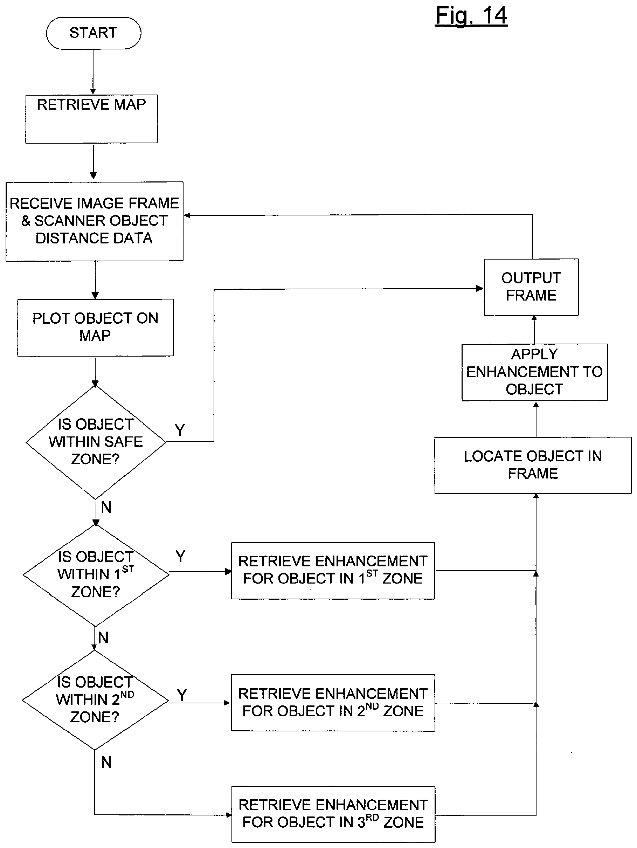

Fig. 14 is a schematic representation of this process. In a first step the processor retrieves, from the data store 109, the map for the hole. In a second step the processor receives a frame of video data and acquires data from the scanner which can be processed to identify the position (with respect to the scanner) of an object (for example a ball) moving within the scanner's field of view.

Using the processed data from the scanner, the processor is configured to plot the position of the ball (for that particular frame) on the map, and following this to determine in the first instance whether the ball is determined to be in the aforementioned safe zone. If the ball is determined to be in the safe zone, and hence on-target, the frame of video data for which the position of the ball has been determined may be output without enhancement, following which the next frame of video data is processed.

If the ball is determined to be outside of the aforementioned safe zone, the processor is configured to determine in which zone (for that frame) the ball currently lies, and to retrieve from the data store 109 the appropriate enhancement to be applied to the image of the ball to communicate this positional information to the viewer.

In this particular example, the processor then processes the input frame of video data to identify the location of the ball. Processing of this type is conventional and may comprise, for example, a pattern matching algorithm that is configured to look at pixels of the video frame to identify a group of pixels that is attributable to the ball in the field of view. Once the position of the ball in the image has been identified, the processor then applies the selected enhancement to the image of the ball and outputs the enhanced video frame from the control unit via a second input/output interface 119 and an enhanced video frame output 121.

The control unit further comprises a second output 123 by means of which an unadulterated video signal may be output, and by virtue of this arrangement a user of the system can choose whether an enhanced or a conventional video signal is to be output from the system. Alternatively, the user of the system may opt to output, for example by way of a broadcast, both signals and leave other users to decide which of the two signal outputs they wish to view. In an envisaged implementation the enhanced image may be broadcast as a channel to which a user can switch (for example by pressing a button on their remote control) should they wish to watch the enhanced signal.

As mentioned above, the processor may be configured to determine deviations from the ideal trajectory in a horizontal plane, a vertical plane, or indeed in both planes using essentially the same process as that outlined above, but with a different map.

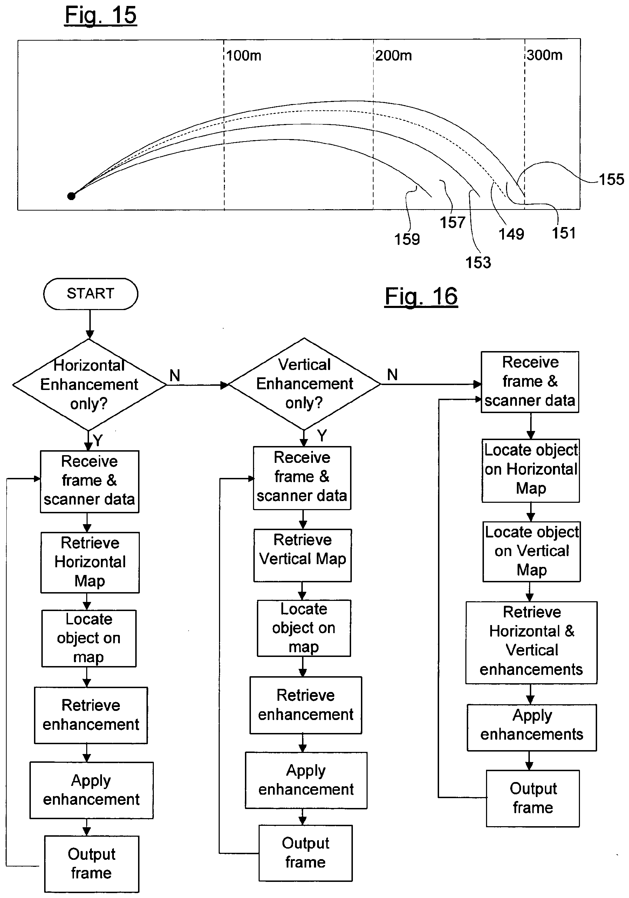

Fig. 15 is a schematic representation of a map that is configured to indicate the position of an object (in this instance a ball) in a vertical plane of the field of view, and whether the object is on or off-target. As before the map comprises an ideal trajectory 149 which lies within a safe-zone 151 that is delimited by first and second boundaries 153, 155. A first off-target zone 157 is defined as being a zone delimited by said first boundary 153 and a third boundary 159, and a second off-target zone 161 is defined as being a zone delimited (at it's upper extent) by said third boundary 159.

As before, balls travelling within the safe zone have trajectories which, whilst not being ideal, would nevertheless be considered to be an acceptable shot. Balls travelling in the first off-target zone are likely to fall short of the region of the fairway in which balls are best placed for the next shot - in this instance - to the green, and balls travelling in the second off-target zone are likely to fall even further short of the region of the fairway best placed for the next shot to the green. Balls travelling in the first and second regions may, for example, have been hit with insufficient power to carry them to the ideal zone for reaching the green with the next shot, alternatively or additionally the player may have mis-hit the ball off the tee or chosen a club whose face is excessively angled (to generate too much lift) for the shot to be played.

As mentioned above, the system may be configured at the user's option to apply only those enhancements relating to horizontal positioning of the ball, only those relating to vertical positioning of the ball, or to apply enhancements relating to both horizontal and vertical positioning of the ball. Fig. 16 illustrates a process by means of which a user is provided with the option of choosing which mode of operation they desire. As indicated in Fig. 16, a user can opt only to enhance the image to show the horizontal position of the ball, to only show the vertical position of the ball, or to show both the horizontal and vertical positions of the ball.

An advantage of the foregoing is that enhancement of the image is entirely independent of the position of the camera. Specifically, the enhancement to be applied to a video image of the hole can be chosen irrespective of the position of the camera with respect to the scanner.

As with the previous embodiment, the enhancement to be applied may comprise a colour change of the portion of the image attributable to the object moving through the scanner's field of view, or the image may be supplemented for example by adding a tail or arrow to indicate the direction in which the object is moving. In the particular arrangement described above, images of objects that are "on-target", that is to say objects which have a trajectory within the safe zone, are not embellished. However, in an alternative arrangement the image of the moving object may always be embellished. For example, objects moving within the safe zone may be coloured green, whereas objects moving within the first off-target zone may be coloured yellow, and objects moving within the second off-target zone may be coloured red.

In another arrangement, certain advantages of the invention may be enjoyed by means of a video camera with auto-focus functionality. In this embodiment, the auto-focus component of the camera is configured (in a known manner) to output a signal indicative of adjustments to the focal length of the camera that need be undertaken to properly focus on an object in the camera's field of view. As well as providing an indication of the degree to which the focal length must be varied, these signals inherently provide an indication of the distance between the camera and the object being viewed.

It is possible, therefore, by processing these signals to provide a system whereby an indication of the trajectory of an object moving within the camera's field of view (and on which the camera is focussing) may be provided.

To implement this functionality, the system comprises a video camera that is equipped with an auto-focus module which is operable to generate a focussing signal indicating to the camera the extent to which the camera's focal length should be adjusted to focus on an object within the camera's field of view.

In this arrangement the focussing signal is also output from the auto-focus module to a control unit which comprises a processor. The processor is configured to calculate, based on the focussing signal received from the auto-focus module of the camera, the distance between the camera and the object in the camera's field of view.

If the position of the camera with respect to a fixed feature of the field of view (such as the try-line or touch-line of a rugby pitch or the goal line or touch line of a football pitch) is known, then the camera can compare the calculated distance between the object and the camera to the distance between the camera and the fixed feature, and provide an indication to the viewer of the location of the object in the field of view in relation to the fixed feature.

In a preferred implementation the processor is configured to provide a visual indication of the position of the object with respect to the fixed feature to the viewer, and to this end the control unit receives a video signal from the video camera and is configured to enhance that video signal to provide an indication of whether the object in the field of view is closer than to the camera than the fixed feature. In a preferred arrangement the processor is configured to enhance the video image to change the colour of the object when the distance between the object and the camera is less than the distance between the camera and the fixed feature.

By virtue of this arrangement, with a camera located a known distance behind the goal (and hence the goal line) on a football pitch for example, it is possible to provide the user with a visual indication of whether a ball travelling towards the goal has actually crossed the goal line.

It will be appreciated from the foregoing that the arrangements described above provide an effective means for enabling a viewer to more easily appreciate the trajectory of an object moving through a given field of view.

As with the earlier embodiment, many modifications and alterations may be made to the scope of the present invention without departing from the claims. For example, as an alternative or in addition to a visual depiction, the system could be arranged to produce audible tones which vary in accordance with the object's deviation from the ideal trajectory.

In another modification, the maps depicted in Figs. 12 and 15 may be adapted to include hazards lying in the fairway, which hazards should be avoided if the player's ball is to land in a good location for their next shot. In this modification, the enhancement provided to a viewer may also include an indication of whether or not the ball moving through the scanner's field of view is likely to land in one of these hazards.

In general terms the teachings of the arrangement outlined above may also be used to provide the viewer with a prediction of where a ball is likely to land once that ball has been struck by a player. For example, using the maps depicted in Figs. 12 and 15 it would be possible to predict that a ball which is within a given zone at two distinct spaced points in time would be likely to land in that zone, and this information may be conveyed visually to a viewer - for example by enhancing the image not to indicate the current position of the object moving therein, but the predicted position at which the object will strike the ground.

In a further modification of any of the embodiments described above, the system may be configured to enhance the video image by superimposing adverts or other visual stimuli onto the video image captured by the video camera. As an illustration of this, a sponsors logo or name could be overlaid onto the video image of a golf green or football pitch. Such adverts or other visual stimuli could dynamically reference the play that is going on. For example, after a good golf shot down the middle of the fairway the advert could say - "another great drive from a Calloway driver",

It should also be noted that whilst particular combinations of features are identified herein as being of importance, the scope of the invention is not limited only to these combinations but instead extends to any combination of features herein described. In particular, the fact that a given feature has only been described herein in the context of one embodiment should not be interpreted as precluding the incorporation of that feature into other embodiments described herein.

## Claims

1. A system (15) for enhancing video images, the system (15) comprising:
a map (29) of a scene, the map including one or more elements (31, 33, 35) representative of three-dimensional topographical characteristics of the scene;
a video camera (37) for generating a video signal of said scene; and
a control unit (27) provided with instructions for adapting a video image of a scene in accordance with a topographical map (29) of the scene to enhance said video image to accentuate the three dimensional topographical characteristics of the scene defined in said map, the control unit being configured to process the video signal from said video camera (37) in accordance with said instructions to accentuate at least those portions of said video image which correspond to said three-dimensional topographical characteristics in said map (29) to thereby generate an output video image in which said three-dimensional characteristics may more easily be appreciated by a viewer, said control unit (27) being configured to compare each frame of said video signal to said map (29), and to identify regions of each said frame that correspond to regions of said map (29) that include elements (31, 33, 35) representative of three-dimensional topographical characteristics of the scene;
the system being **characterised in that** said control unit (27) is configured to implement block-by-block processing of each frame of said video signal, and to implement pixel-by-pixel processing of only those blocks of each frame that are identified to include a three-dimensional topographical characteristic.

2. A system according to Claim 1, further comprising a scanner (17) that is configured to scan the scene to generate said map, said scanner (17) being operable to provide output data indicative of three-dimensional topographical features of the scene.

3. A system according to Claim 1 or 2, wherein said scanner (17) is operable to output a direction data signal that includes information relating the position of the scanner (17) to a reference position.

4. A system according to Claim 3, wherein said direction data signal includes azimuth data defining the angular distance in a horizontal plane between a current orientation of said scanner (17) and a reference orientation.

5. A system according to any preceding claim, further comprising a unit operable to output information relating to the orientation of the camera with respect to a reference orientation.

6. A system according to Claim 5, wherein said unit comprises a giro unit (31), preferably a giro unit (31) mounted on a tripod (41) or other support on which said camera (37) is supported, said giro unit (31) being coupled to said camera (37) so that information relating to the orientation of the camera output by said unit changes as the orientation of said camera (37) changes.

7. A system according to any preceding claim, wherein said camera (37) is adjustable to capture different fields of view of said scene and said control unit (27) comprises means for adjusting a field of view of said map in accordance with adjustments made to said camera.

8. A system according to any preceding claim, further comprising storage (73) for information relating to enhancements that may be applied to a video signal, each of said enhancements being associated with a particular type of three-dimensional topographical characteristic.

9. A system according to Claim 8, wherein a said frame of the video signal comprises a three-dimensional topographical characteristic and said control unit (27) is configured to retrieve from said storage (73) information for the enhancement that corresponds to the type of three-dimensional topographical characteristic included in said frame and to apply said enhancement to said frame.

10. A system according to Claim 8 or 9, wherein a said enhancement comprises a gradual shading to be applied to pixels of said frame that are associated with said three-dimensional topographical characteristic.

11. A system according to Claim 10, wherein said control unit (27) is configured to determine the colour of pixels or blocks in which a three-dimensional feature is determined to occur and to vary the colour of said pixels in accordance with information pertaining to the enhancement retrieved from the storage for that three-dimensional feature.

12. A system according to Claim 8 or 9, wherein a said enhancement comprises a plurality of indicators that are to be applied to pixels of said frame that are associated with said three-dimensional topographical characteristic.

## Patentansprüche

1. Ein System (15) zur Verbesserung von Videobildern, wobei das System (15) Folgendes umfasst:
eine Karte (29) einer Szene, wobei die Karte ein oder mehr Elemente (31, 33, 35) beinhaltet, welche die dreidimensionalen topografischen Merkmale der Szene repräsentieren;
eine Videokamera (37) zur Erzeugung eines Videosignals besagter Szene; und
eine Steuereinheit (27) mit Anweisungen zum Adaptieren eines Videobildes einer Szene gemäß einer topografischen Karte (29) der Szene zur Verbesserung besagten Videobilds, um die dreidimensionalen topografischen Merkmale der Szene, die in besagter Karte definiert sind, hervorzuheben. Die Steuereinheit ist so konfiguriert, dass das Videosignal von besagter Videokamera (37) gemäß besagten Anweisungen zur Hervorhebung von zumindest jenen Teilen des besagten Videobildes, welches den besagten dreidimensionalen topografischen Merkmalen in besagter Karte (29) entspricht, verarbeitet wird, und dadurch ein Ausgabevideobild erzeugt wird, bei dem die besagten dreidimensionalen Merkmale von einem Betrachter möglicherweise einfacher zu sehen sind, wobei besagte Steuereinheit (27) auch so konfiguriert ist, um die Einzelbilder besagten Videosignals mit besagter Karte (29) vergleichen zu können und Bereiche besagter Einzelbilder zu identifizieren, die Bereichen besagter Karte (29) entsprechen, welche Elemente aufweisen (31, 33, 35), die dreidimensionale topografische Merkmale der Szene darstellen.
das System, **gekennzeichnet dadurch, dass** besagte Steuereinheit (27) für die blockweise Verarbeitung der Einzelbilder des besagten Videosignals und die pixelweise Verarbeitung nur jener Blöcke von Einzelbildern konfiguriert ist, die ein dreidimensionales topografisches Merkmal aufweisen.

2. Ein System nach Anspruch 1, das zudem einen Scanner (17) umfasst, der zum Scannen der Szene konfiguriert ist, um besagte Karte zu erzeugen, und besagter Scanner (17) Daten mit dreidimensionalen topografischen Merkmalen der Szene ausgeben kann.

3. Ein System nach Anspruch 1 oder 2, wobei besagter Scanner (17) ein Richtungsdatensignal ausgeben kann, das Informationen über die Position des Scanners (17) zu einer Referenzposition gibt.

4. Ein System nach Anspruch 3, wobei besagtes Richtungsdatensignal Azimut-Daten enthält, die den Winkelabstand auf einer horizontalen Ebene zwischen einer aktuellen Ausrichtung besagten Scanners (17) und einer Referenzausrichtung bestimmt.

5. Ein System nach einem der vorhergehenden Ansprüche, das zudem eine Einheit umfasst, die Informationen über die Ausrichtung der Kamera in Bezug zu einer Referenzausrichtung ausgeben kann.

6. Ein System nach Anspruch 5, wobei besagte Einheit eine Giro-Einheit (31) umfasst, bevorzugt eine Giro-Einheit (31) auf einem Stativ (41) oder einer anderen Auflage montiert, das/die besagte Kamera (37) abstützt, besagte Giro-Einheit (31) mit besagter Kamera (37) verbunden ist, sodass Informationen in Bezug auf die Ausrichtung der Kamera, die von besagter Einheit ausgegeben werden, sich ändern, wenn sich die Ausrichtung besagter Kamera (37) ändert.

7. Ein System nach einem der vorhergehenden Ansprüche, wobei besagte Kamera (37) verstellbar ist, um verschiedene Blickfelder besagter Szene zu erfassen, und besagte Steuereinheit (27) eine Methode zur Änderung eines Blickfeldes besagter Karte gemäß den Änderungen, die an der besagten Kamera gemacht wurden, umfasst.

8. Ein System nach einem der vorhergehenden Ansprüche, das zudem einen Speicher (73) zum Speichern von Informationen über mögliche Verbesserungen an einem Videosignal umfasst, und jede der besagten Verbesserungen mit einer bestimmten Art des dreidimensionalen topografischen Merkmals assoziiert wird.

9. Ein System nach Anspruch 8, wobei ein besagtes Einzelbild des Videosignals ein dreidimensionales topografisches Merkmal umfasst und besagte Steuereinheit (27) so konfiguriert ist, dass besagte Speicherinformationen (73) bezüglich der Verbesserung, die der Art des dreidimensionalen topografischen Merkmals des besagten Einzelbilds entspricht, abgerufen werden und besagte Verbesserung auf besagtes Einzelbild übertragen wird.

10. Ein System nach Anspruch 8 oder 9, wobei eine besagte Verbesserung eine graduelle Abschattung der Pixel des besagten Einzelbildes umfasst, das mit besagtem dreidimensionalem topografischen Merkmal assoziiert wird.

11. Ein System nach Anspruch 10, wobei besagte Steuereinheit (27) so konfiguriert ist, um die Farbe der Pixel oder Blöcke mit einem dreidimensionalem Merkmal zu bestimmen und die Farbe besagter Pixel gemäß den Informationen über die Verbesserung, welche vom Speicher für dieses dreidimensionale Merkmal abgerufen wird, variiert wird.

12. Ein System nach Anspruch 8 oder 9, wobei besagte Verbesserung eine Vielzahl von Indikatoren umfasst, die auf Pixel des besagten Einzelbildes angewandt werden, die mit besagtem dreidimensionalem topografischem Merkmal assoziiert werden.

## Revendications

1. Un système (15) pour améliorer les images vidéo, le système (15) comprenant :
une carte (29) d'une scène, la carte incluant un ou plusieurs éléments (31, 33, 35) représentatifs des caractéristiques topographiques tridimensionnelles de la scène ;
une caméra vidéo (37) pour générer un signal vidéo de ladite scène ; et
une unité de commande (27) fournie avec instructions pour adapter une image vidéo d'une scène conformément à une carte topographique (29) de la scène afin d'améliorer ladite image vidéo pour accentuer les caractéristiques topographiques tridimensionnelles de la scène définie dans ladite carte, l'unité de commande étant configurée pour traiter le signal vidéo provenant de ladite caméra vidéo (37) conformément auxdites instructions afin d'accentuer au moins les portions de ladite image vidéo qui correspondent auxdites caractéristiques topographiques tridimensionnelles dans ladite carte (29) et ainsi générer une image vidéo de sortie dans laquelle lesdites caractéristiques topographiques tridimensionnelles sont plus facilement appréciées par un spectateur, ladite unité de commande (27) étant configurée pour comparer chaque trame dudit signal vidéo de ladite carte (29), et pour identifier les régions de chacune desdites trames qui correspondent aux régions de ladite carte (29) incluant les éléments (31, 33, 35) représentatifs des caractéristiques topographiques tridimensionnelles de la scène ;
le système étant **caractérisé en ce que** ladite unité de commande (27) est configurée pour mettre en oeuvre le traitement bloc par bloc de chaque trame dudit signal vidéo, et pour mettre en oeuvre le traitement pixel par pixel uniquement des blocs de chaque trame identifiée comme incluant une caractéristique topographique tridimensionnelle.

2. Un système selon la Revendication 1, comprenant en outre un scanner (17) configuré pour scanner la scène afin de générer ladite carte, ledit scanner (17) étant utilisable pour fournir des données de sortie indicatives des éléments topographiques tridimensionnels de la scène.

3. Un système selon la Revendication 1 ou 2, dans lequel ledit scanner (17) est utilisable pour produire des signaux de données directionnelles incluant des informations relatives à la position du scanner (17) par rapport à une position de référence.

4. Un système selon la Revendication 3, dans lequel lesdits signaux de données directionnelles incluent des données azimuts définissant la distance angulaire dans un plan horizontal entre l'orientation actuelle dudit scanner (17) et l'orientation de référence.

5. Un système selon l'une quelconque des Revendications précédentes, comprenant en outre une unité utilisable pour produire des informations relatives à l'orientation de la caméra par rapport à une orientation de référence.

6. Un système selon la Revendication 5, dans lequel ladite unité comprend une unité gyroscopique (31) préférablement une unité gyroscopique (31) montée sur un trépied (41) ou autre support sur lequel ladite caméra (37) repose, ladite unité gyroscopique (31) étant couplée à ladite caméra (37) de sorte que les informations relatives à l'orientation de la sortie de caméra par ladite unité changent en fonction de l'orientation des changements de ladite caméra (37).

7. Un système selon l'une quelconque des Revendications précédentes, dans lequel ladite caméra (37) est ajustable pour capturer différents champs de vision de ladite scène et ladite unité de contrôle (27) comprend des moyens pour ajuster un champ de vision de ladite carte conformément aux ajustements effectués sur ladite caméra.

8. Un système selon l'une quelconque des Revendications précédentes, comprenant en outre un stockage (73) des informations relatives aux améliorations pouvant être appliquées au signal vidéo, chacune desdites améliorations étant associée à un type particulier de caractéristique topographique tridimensionnelle.

9. Un système selon la Revendication 8, dans lequel une desdites trames de signal vidéo comprend une caractéristique topographique tridimensionnelle et ladite unité de contrôle (27) est configurée pour extraire dudit stockage (73) des informations d'amélioration correspondant au type de caractéristique topographique tridimensionnelle incluse dans ladite trame et pour appliquer lesdites améliorations à ladite trame.

10. Un système selon la Revendication 8 ou 9, dans lequel ladite amélioration comprend un ombrage progressif à appliquer aux pixels de ladite trame qui sont associés à ladite caractéristique topographique tridimensionnelle.

11. Un système selon la Revendication 10, dans lequel ladite unité de contrôle (27) est configurée pour déterminer la couleur des pixels ou des blocs dans lesquels un élément tridimensionnel doit se produire et pour varier la couleur desdits pixels de façon conforme aux informations relatives à l'amélioration extraite du stockage pour cet élément tridimensionnel.

12. Un système selon la Revendication 8 ou 9, dans lequel ladite amélioration comprend une pluralité d'indicateurs devant être appliqués aux pixels de ladite trame qui sont associés à ladite caractéristique topographique tridimensionnelle.
